# EUROPÄISCHE PATENTSCHRIFT

(11) **EP 1 301 342 B1**
(45) Veröffentlichungstag und Bekanntmachung des Hinweises auf die Patenterteilung: **24.09.2008**
(21) Anmeldenummer: 01927873.8
(22) Anmeldetag: 05.04.2001
(51) Int. Cl.: B32B 27/18, B32B 27/32

(54) **BIAXIAL ORIENTIERTE POLYOLEFINFOLIE MIT VERMINDERTER BLOCKNEIGUNG GEGEN KALTSIEGELMASSEN**
BIAXIALLLY ORIENTED POLYOLEFINS WITH A REDUCED BLOCKING TENDENCY WITH RESPECT TO COLD SEALING PRODUCTS
FEUILLE DE POLYOLEFINE A ORIENTATION BIAXIALE A TENDANCE AU BLOCAGE REDUITE VIS-A-VIS DE PRODUITS D'ETANCHEITE A FROID

(30) Priorität: 13.04.2000 DE 10018442
(43) Veröffentlichungstag der Anmeldung: 16.04.2003
(73) Patentinhaber: Treofan Germany GmbH & Co.KG, 66539 Neunkirchen (DE)
(72) Erfinder: WIENERS, Gerhard, 60320 Frankfurt (DE); HOLZER, Susanne, 66564 Ottweiler (DE); SCHISCHKO, Jürgen, 66539 Neunkirchen-Furpach (DE)
(86) Internationale Anmeldenummer: PCT/EP2001/003858
(87) Internationale Veröffentlichungsnummer: WO 2001/078979

(56) Entgegenhaltungen:
- WO-A-00/32395
- DE-A- 19 836 657
- US-A- 4 590 125
- US-A- 5 482 780

## Beschreibung

Die Erfindung betrifft eine Polypropylenfolie mit verminderter Neigung zum Verblocken gegen Kaltsiegelkleber.

Lebensmittel und andere Packgüter werden häufig in Verpackungsfolien eingeschweißt, wobei zur Herstellung der Siegelnaht erhöhte Temperaturen, in der Regel über 100 °C, angewendet werden müssen. Verschiedene Packgüter wie zum Beispiel Schokolade verändern sich unter Temperatureinfluß. Für derartige Anwendungsfälle werden heutzutage sogenannte Kaltsiegelmassen eingesetzt, die in dünnen Schichten, häufig nicht vollflächig, sondern nur im Bereich der Siegelnaht aufgetragen werden. Die Kaltsiegelmassen sind so eingestellt, daß sie bereits bei Zimmertemperatur oder nur leicht erhöhte Temperatur praktisch nur durch Anwendung von Druck verschweißt werden können. Diese Kaltsiegelmassen werden bevorzugt unmittelbar vor oder nach der Bedruckung der Folien aufgetragen. Die bedruckten und mit Kaltsiegelkleber beschichteten Folien bzw. Folienverbunde werden danach bis zum Gebrauch in Form von Rollen gelagert. Dabei muß ein Verkleben oder Verblocken der Außenseite des Verbundes mit dem Kaltsiegelkleber auf der Innenseite des Folienverbundes vermieden werden (Releasewirkung). Darüber hinaus ist gefordert durch entsprechenden Glanz das äußere Erscheinungsbild positiv zu beeinflussen.

Die gewünschte Releasewirkung läßt sich auf verschiedenen Wegen erzielen. Zum einen werden sogenannte Release-Lacke aufgetragen, wobei zur Erzielung eines ausreichenden Glanzes vergleichsweise große Mengen des Lackes aufgetragen werden müssen, um Unebenheiten durch Druckbild-bedingte unterschiedliche Dicke des Farbauftrags auszugleichen. Die Anwendung von Releaselacken erfordert den Auftrag entsprechender Lack-Lösungen oder -Dispersionen, die unter Energieeinsatz getrocknet werden müssen. Zudem ist eine sorgfältige Kontrolle der Verarbeitungsbedingungen erforderlich, um die hohe optische Güte des Lackauftrags gewährleisten zu können.

Des weiteren können auch transparente, hoch glänzende Folien mit einer Basisfolie laminiert werden, die aufgrund ihrer Rezeptur und/oder Oberflächenstruktur nur eine geringe Blockneigung gegen den Kaltsiegelkleber aufweisen (Releasefolie). Hierbei wird das Erscheinungsbild des Verbundes durch den Glanz der aufgebrachten Folie bestimmt. Des weiteren kann die auflaminierte Deckfolie zur Steifigkeit des Folienverbundes beitragen.

Für verschiedene Anwendungszwecke wurden unterschiedliche Kaltsiegelkleber entwickelt, die sich nach Zusammensetzung und Eigenschaften zum Teil erheblich voneinander unterscheiden. Entsprechend unterschiedlich sind die Anforderungen an die Release-Lacke und -Folien. Je nach Anwendungsfall kann trotz Release-Lack oder - Folien ein erheblicher Kraftaufwand erforderlich sein, um die kaltsiegel-beschichtete Folien oder den Folienverbund abzurollen. In manchen Fällen kommt es dabei zur Delaminierung des Release Lacks, gegebenenfalls samt anhaftender Druckfarbe. Dies führt zu Störungen in der Funktion des Kaltsiegelklebers durch partielle Überdeckung des Klebers durch die übertragenen Farb- und Lackschichten sowie zu entsprechende Fehlstellen im Druckbild. Dabei können die Lagerbedingungen (Temperatur, Luftfeuchte) die Anfälligkeit für und den Grad der Verblockung beeinflussen.

Im Stand der Technik ist kein Verfahren bekannt, daß die Neigung zum Verblocken einer beliebigen Paarung von Kaltsiegelmasse und Release-Lack oder - Folie vermeidet. Es ist daher erforderlich, mittels aufwendiger empirischer Reihenuntersuchungen für einen gegebenen Kaltsiegelkleber geeignete Release-Lacke oder -Folien zu identifizieren.

Geeignete Release-Folien sind bekannt. Bevorzugt werden biaxial orientierte Polypropylenfolien (BOPP-Folien) für diesen Zweck eingesetzt, deren Deckschichten aus PP-Homopolymeren bestehen und geringe Anteile an Polysiloxanen enthalten.
DE 198 36 657 beschreibt eine mehrschichtige siegelfähige Folie mit einer wachshaltigen Zwischenschicht. Das Wachs verbessert die für Verpackungen wichtige Barriereeigenschaften und hat ein Molekulargewicht Mn von 200 bis 1200. Die Modifizierung der Deckschichten durch Zusatz von Wachs ist nicht beschrieben. Eine Verwendung dieser Folien als Etikettenfolie oder in einem Laminat gegen Papier ist nicht erwähnt.

Der vorliegenden Erfindung liegt daher die Aufgabe zu Grunde, eine transparente, optisch ansprechende Polyolefinfolie zur Verfügung zu stellen, welche gegenüber Kaltsiegelbeschichtungen eine gute Release Wirkung aufweist, wobei diese Releasewirkung gegenüber einer breiten Palette von Kaltsiegelklebern gegeben sein soll. Zusätzlich soll die Folie auf der gegenüberliegenden Oberfläche eine gute Haftung gegenüber Druckfarben oder Kaschierklebern aufweisen, damit die Releasefolie mit ihrer zweiten Oberfläche gegen eine bedruckte oder unbedruckte BOPP-Basisfolie zuverlässig laminiert werden kann. Eine Rolle des Kaltsiegel-beschichteten Folienverbundes muß mit niedrigen Kräften und ohne Farbübertrag abgerollt werden können.

Diese Aufgabe wird gelöst, durch die Verwendung einer mehrschichtigen biaxial orientierten Polyolefinfolie mit einer Innenseite und einer Außenseite als Releasefolie in einem Folienlaminat aus einer Basisschicht und mindestens einer äusseren Deckschicht und einer optionalen äußeren Zwischenschicht, wobei die Releasefolie in der Basisschicht und/oder in der äusseren Deckschicht und/oder in der äußeren Zwischenschicht mindestens einer Schicht ein Wachs enthält, wobei die zur Laminierung vorgesehene innere Schicht im wesentlichen frei von Wachs ist und die Folie auf der Innenseite mittels Plasma, Corona oder Flamme behandelt ist und auf der Außenseite nicht mittels Plasma, Corona oder Flamme behandelt ist.

Nachfolgend wird als Innenseite bzw. innere Oberfläche oder innere Schicht diejenige Seite oder Oberfläche oder Schicht der Releasefolie bezeichnet, welche gegen die Basisfolie laminiert wird. Üblicherweise ist bei Verpackungsanwendungen diese Seite dem Packgut zugewandt und wird auch deshalb als Innenseite bezeichnet. Die Außenseite oder äußere Oberfläche oder äußere Schicht ist entsprechend die gegenüberliegende Seite oder die gegenüberliegende Deckschicht der Releasefolie, deren Oberfläche nach dem Aufrollen des Laminats mit dem Kaltsiegelkleber in Kontakt steht.

Die Erfindung betrifft weiterhin ein Laminat aus einer polyolefinischen Basisfolie, welche mittels Kaschierkleber oder mittels Extrusionslaminierung mit einer Releasefolie laminiert ist, wobei die Releasefolie eine Innenseite und eine Außenseite aufweist und wobei die Basisfolie auf ihrer äusseren Oberfläche einen Kaltsiegelkleber aufweist und die Releasefolie mit ihrer Innenseite gegen die Basisfolie laminiert ist und in der Basisschicht und/oder in einer optionalen äusseren Zwischenschicht und/oder in der äusseren Deckschicht ein Wachs enthält und auf ihrer Außenseite nicht mittels Corona, Flamme oder Plasma behandelt und auf der Innenseite mittels Plasma, Corona oder Flamme behandelt ist

Im Rahmen der vorliegenden Erfindung wurde gefunden, daß Wachse in einer Polyolefinfolie gegenüber Kaltsiegelklebern sehr gute Release Eigenschaften aufweisen. Das Laminat aus beschichteter Basisfolie und wachshaltiger Releasefolie läßt sich nach Lagerung in Rollenform hervorragend abwickeln, ohne daß es zu einer Beschädigung der vorher aufgebrachten Kaltsiegelschicht kommt. Die Releasefolie muß erfindungsgemäß in bestimmten Schichten mit dem Wachs rezepturiert werden, um die gewünschte Releasewirkung gegenüber der Kaltsiegelkleberschicht sicherzustellen. Nachfolgend werden einzelne Ausführungsformen der Erfindung bezüglich ihres Schichtaufbaus und ihrer Rezepturierung mit Wachs beschrieben.

In einer Ausführungsform der Erfindung ist die Releasefolie zwei- oder dreischichtig aus einer Basisschicht und mindestens einer Deckschicht aufgebaut und enthält ein Wachs in der Basisschicht. Die Wachsmenge in der Basisschicht liegt im allgemeinen in einem Bereich von 0,01 bis 15 Gew.-% bezogen auf das Gewicht der Basisschicht. Vorzugsweise ist diese Ausführungsform auf der inneren Oberfläche mittels Corona, Flamme oder Plasma behandelt. Es ist im Stand der Technik bekannt, daß Wachse und andere übliche Additive innerhalb der Polymeren, aus denen eine Folie aufgebaut ist, migrieren können. Es ist auch bekannt, daß sie bevorzugt zu der Oberfläche der Folie migrieren, die Corona- Flamm- oder Plasma-behandelt ist, ferner, daß sich migrationsfähige Additive in ihrem Migrationsverhalten gegenseitig beeinflussen. Es war daher naheliegend zu vermuten, daß die Wachse aus der Basisschicht unerwünschterweise bevorzugt zur behandelten inneren Oberfläche, migrieren und dort die Haftung des Laminierklebers oder der Druckfarben beeinträchtigen würden.

Überraschenderweise wurde nun gefunden, daß der Einfluß der Wachse die Verarbeitung der Releasefolie zum Laminat oder Verbund nicht behindert. Nach dem Aufwickeln des mit Kaltsiegelkleber beschichteten Verbundes kann die Rolle gelagert und anschließend ohne Probleme abgewickelt werden. Dies wurde auch dann beobachtet, wenn weitere migrationsfähige Additive in der Folie enthalten sind und die innere Oberfläche der Folie Corona-, Flamm- oder Plasma-behandelt wurde.

In einer bevorzugten Ausführungsform ist die Releasefolie eine dreischichtige Folie, welche Wachs, im allgemeinen in einer Menge von 0,01 bis 15 Gew.-%, in ihrer Basisschicht enthält und beidseitig Deckschichten aufweist. Vorzugsweise ist eine der beiden Deckschichten mittels Plasma, Flamme oder Corona behandelt, nachstehend als innere Deckschicht bezeichnet. Diese behandelte innere Oberfläche wird vor der Laminierung mit der Basisfolie gegebenenfalls mit einem Konterdruck versehen. Es wurde gefunden, daß das Wachs in der Basisschicht die Druckfarbenhaftung nicht beeinträchtigt. In einer bevorzugten Ausführungsform bleibt die behandelte innere Oberfläche der Releasefolie unbedruckt. In jedem Fall wird die Basisfolie gegen diese innere Deckschicht der Releasefolie mittels geeigneter Kaschierkleber laminiert. Es wurde gefunden, daß die Haftung des Kaschierklebers und die Verbundhaftung des Laminats durch die Oberflächenbehandlung der inneren Deckschicht deutlich verbessert werden kann. Die haftverbessemde Wirkung einer Oberflächenbehandlung war im Stand der Technik an sich bekannt. Es war jedoch für die Wachs-modifizierte Folie nicht vorhersehbar, ob die Oberflächenbehandlung der inneren Deckschicht nicht gleichzeitig die Migration des Wachses zu dieser Oberfläche fördert. Eine derartige migrationsfördemde Wirkung würde zu einer Anreicherung von Wachs auf dieser inneren Oberfläche führen und sowohl die Haftung der Druckfarben als auch die Haftung des Kaschierklebers nachteilig beeinflussen. Zusätzlich würde die gewünschte Releasewirkung auf der gegenüberliegenden äußeren Seite beeinträchtigt, da dorthin vergleichsweise geringe Mengen an Wachs gelangen können. Überraschenderweise zeigte die wachshaltige Releasefolie im Verbund eine gute Release Wirkung auf der Außenseite und gleichzeitig wurde durch die Oberflächenbehandlung die haftverbessemde Wirkung gegenüber Druckfarben und Kaschiekleber auf der Innenseite erzielt. Die dreischichtigen Releasefolie ist daher hervorragend zur Laminierung gegen eine Basisfolie mit Kaltsiegelkleber geeignet. Der fertige Verbund läßt sich problemlos von der Rolle verarbeiten. Beim Abwickeln müssen keine extremen Kräfte aufgewendet werden, wodurch das Risiko von Verdehnungen und Störungen des Druckbildes vermieden werden. Die Kaltsiegelkleberschicht bleibt nach dem Abwickeln des Verbundes ohne Fehlstellen erhalten. Der Verbund kann ohne Probleme zu einer Einschlagsverpackung verarbeitet werden.

Im Rahmen weiterer Untersuchungen wurde gefunden, daß es zusätzlich bevorzugt ist die äußere Oberfläche der dreischichtigen Releasefolie keiner Behandlung zur Erhöhung der Oberflächenspannung, beispielsweise durch Flamme, Corona oder Plasma, zu unterwerfen. Eine solche Variante der Releasefolie wurde hergestellt, um eine gleichmäßige Migration auf die Außen- und Innenseite der Folie sicherzustellen. Es wurde jedoch gefunden, daß die beidseitig oberflächenbehandelte Releasefolie zwar die gewünschte gute Haftung auf der Innenseite aufweist, daß aber gleichzeitig die Folie eine sehr starke Blockneigung zeigt. Nach der Verarbeitung zum Verbund war die Haftung zwischen der äußeren Oberfläche der Releasefolie und der Kaltsiegelkleberschicht der Basisfolie sehr hoch. Dies behinderte die Weiterverarbeitung der Rolle. Es kam teilweise zu Verdehnungen beim Abwickeln und zu Störstellen in der Kleberbeschichtung.

In einer weiteren bevorzugten Ausführungsform der Erfindung weißt die Releasefolie zwischen der Basisschicht und der Deckschicht zusätzlich eine Zwischenschicht auf, d.h. diese Ausführungsformen der Releasefolie sind mindestens dreischichtig, vorzugsweise vierschichtig, gegebenfalls auch fünfschichtig aufgebaut. Die Wachsmengen in der Zwischenschicht liegt im allgemeinen in einem Bereich von 0,01 bis 10 Gew.-% bezogen auf das Gewicht der Zwischenschicht. Die Basisschicht bleibt in diesen Ausführungsformen im wesentlichen frei von Wachs. Statt dessen wird das Wachs in die bzw. in eine der beiden Zwischenschichten eingearbeitet. Dabei wurde gefunden, daß die Menge an Wachs, in der wachshaltigen Zwischenschicht gegenüber dem Gehalt bei Einarbeitung in die Basisschicht nicht oder nur geringfügig erhöht werden mußte. Somit hat diese Ausführungsform den zusätzlichen Vorteil, daß bezogen auf das Gesamtgewicht der Folie eine deutliche Einsparung an Wachs möglich ist, wobei die Releasewirkung noch immer hervorragend ist.

Diese Releasefolie mit Zwischenschicht wird derart zu dem Laminat verarbeitet, daß diejenige Deckschicht, welche die wachshaltige Zwischenschicht abdeckt, die Außenseite des Laminats bildet. Daher werden diese Schichten nachfolgend als äußere Deckschicht, bzw. äußere Zwischenschicht bezeichnet. Entsprechend sind die gegenüberliegenden Schichten die innere Deckschicht, bzw. die innere Zwischenschicht, falls vorhanden. Auch diese Ausführungsform der Erfindung wird vorzugsweise auf der Innenseite, d.h. auf der Oberfläche der inneren Deckschicht durch Plasma, Corona oder Flamme oberflächenbehandelt, wobei es gleichzeitig bevorzugt ist die äußere Deckschicht keiner entsprechenden Behandlung zu unterwerfen. Hier treten sinngemäß die gleichen Effekte wie für die vorstehend beschriebene dreischichtige Releasefolie auf. Die Oberflächenbehandlung der inneren Deckschicht verbessert die Haftung von Druckfarben und/oder Kaschierkleber, während die entsprechende Behandlung auf der gegenüberliegenden äußeren Oberfläche negative Einflüsse hat, insbesondere eine zu starke Haftung gegenüber dem Kaltsiegelkleber erzeugt, d.h. die Releasewirkung beeinträchtigt, wodurch die Verarbeitung des Laminats behindert wird.

Im Falle beidseitiger Zwischenschichten ist es bevorzugt nur der äußeren Zwischenschicht ein Wachs hinzuzufügen, während der gegenüberliegenden inneren Zwischenschicht kein Wachs hinzugefügt wird.

Bei der Verarbeitung der Releasefolie mit Zwischenschicht zu dem erfindungsgemäßen Laminat wird eine Basisfolie mittels Kaschierkleber gegen die Innenseite der Releasefolie laminiert, der Kaltsiegelkleber wird auf die verbleibende Oberfläche der Basisfolie aufgebracht und das Laminat zu einer Rolle aufgewickelt.

In einer weiteren Ausführungsform der Erfindung weist die Releasefolie alternativ oder zusätzlich Wachs in ihrer äußeren Deckschicht auf. Die Wachsmenge in der Deckschicht liegt im allgemeinen in einem Bereich von 0,01 bis 5 Gew.-%, bezogen auf das Gewicht der Deckschicht. Dieses Merkmal kann in zwei-, drei-, vier- und fünfschichtigen Schichtaufbauten realisiert werden. Die zusätzlichen Schichten sind vorzugsweise wachsfrei, gegebenenfalls kann aber eine vorhandene äußere Zwischenschicht zusätzlich Wachs enthalten, wobei der Wachsgehalt in der Zwischenschicht dann 0,01 bis 10 Gew.-% bezogen auf das Gewicht der Zwischenschicht beträgt. Die benötigten Wachsmengen (Absolutmenge bezogen auf die Folie) dieser Ausführungsformen liegen erheblich unter denen bei Einsatz der Wachse in der Basisschicht. Oberflächenbehandlungen mittels Flamme, Plasma oder Corona sind wie vorstehend beschrieben für die innere wachsfreie Deckschicht, bzw. Oberfläche bevorzugt. Analog erfolgt die Laminierung mit der Basisfolie gegen die, vorzugsweise behandelte, innere Deckschicht Diese Ausführungsformen mit Wachs in der Deckschicht haben den zusätzlichen Vorteil, daß die Releasewirkung bereits kurze Zeit nach der Herstellung der Releasefolie vorhanden ist.

Geeignete Wachse für die vorliegenden Erfindung sind vorzugsweise Polyethylenwachse oder Paraffine.

Polyethylenwachse sind niedrigmolekulare Polymere, die im wesentlichen aus Ethyleneinheiten aufgebaut und teil- oder hochkristallin sind. Die Polyethylenwachse können gestrecktkettig oder verzweigt sein, wobei kürzere Seitenketten überwiegen. Im allgemeinen werden Polyethylenwachse durch direkte Polymerisation des Ethylens, gegebenenfalls unter Einsatz von Reglern, oder durch Depolymerisation von Polyethylenen mit höheren Molmassen hergestellt. Erfindungsgemäß haben die Polyethylenwachse ein mittleres Molekulargewicht Mn (Zahlenmittel) von 200 bis 5000, vorzugsweise von 300 bis 3500, besonders bevorzugt 400 bis 2500 und vorzugsweise eine Molekulargewichtsverteilung (Polydispersität) Mw/Mn von unter 3, vorzugsweise 1 2. Der Schmelzpunkt liegt im allgemeinen im Bereich von 70 bis 150°C, vorzugsweise 80 bis 100°C.

Paraffine umfassen makrokristalline Paraffine (Paraffinwachse) und mikrokristalline Paraffine (Mikrowachse). Die makrokristallinen Paraffine werden aus den Vakuumdestillatfraktionen bei deren Verarbeitung auf Schmieröle gewonnen. Die mikrokristallinen Paraffine stammen aus den Rückständen der Vakuumdestillation und den Sedimenten paraffinischer Rohöle (Ausscheidungsparaffine). Die makrokristallinen Paraffine bestehen überwiegend aus n-Paraffinen, die zusätzlich je nach Raffinationsgrad iso-Paraffine, Naphtene und Alkylaromaten enthalten. Die mikrokristallinen Paraffine bestehen aus einem Gemisch von Kohlenwasserstoffe, die bei Raumtemperatur vorwiegend fest sind. Anders als bei den makrokristallinen Paraffinen sind die iso-Paraffine und naphtenische Paraffine vorherrschend. Die mikrokristallinen Paraffine zeichnen sich durch das Vorhandensein von kristallisationshemmenden, stark verzweigten iso-Paraffinen und Naphtenen aus. Für die Zwecke der Erfindung sind Paraffine mit einem Schmelzpunkt von 60 bis 100°C, vorzugsweise 60 bis 85°C besonders geeignet.
Die Wachse werden vorzugsweise über ein Konzentrat aus Polyolefin und Wachs, sogenannte Compounds oder Masterbatche in die Folie, bzw. in die jeweiligen Schichten eingearbeitet. Die Wachskonzentration im Masterbatch oder Compound beträgt 5 bis 40 Gew.-% bezogen auf das Masterbach.

Die Basisschicht der verschiedenen vorstehend beschrieben Ausführungsformen der Releasefolie ist im allgemeinen aus einem Polyolefin, vorzugsweise aus Propylenpolymeren aufgebaut. Die Basisschicht enthält im allgemeinen mindestens 70 Gew.-%, vorzugsweise 70 bis <100 Gew.-%, insbesondere 80 bis 99,4 Gew.-%, jeweils bezogen auf die Basisschicht, eines Propylenpolymeren.

Im allgemeinen enthält das Propylenpolymer mindestens 90 Gew.-%, vorzugsweise 94 bis 100 Gew.-%, insbesondere 98 bis 100 Gew.-%, Propylen. Der entsprechende Comonomergehalt von höchstens 10 Gew.-% bzw. 0 bis 6 Gew.-% bzw. 0 bis 2 Gew.-% besteht, wenn vorhanden, im allgemeinen aus Ethylen. Die Angaben in Gew.-% beziehen sich jeweils auf das Propylenpolymere. Bevorzugt sind isotaktische Propylenhomopolymere mit einem Schmelzpunkt von 140 bis 170 °C, vorzugsweise von 155 bis 165 °C, und einen Schmelzflußindex (Messung DIN 53 735 bei 21,6 N Belastung und 230 °C) von 1,0 bis 10 g/10 min, vorzugsweise von 1,5 bis 6,5 g/10 min. Der n-heptanlösliche Anteil des Polymeren beträgt im allgemeinen 1 bis 10 Gew.-%, vorzugsweise 2-5 Gew.-% bezogen auf das Ausgangspolymere.
Die Molekulargewichtsverteilung des Propylenpolymeren kann je nach Anwendungsgebiet in breiten Grenzen variierten. Das Verhältnis des Gewichtsmittels M_{w} zum Zahlenmittel Mₙ liegt im allgemeinen zwischen 1 und 15, vorzugsweise bei 2 bis 6. Eine derartig enge Molekulargewichtsverteilung erreicht man beispielsweise durch dessen peroxidischen Abbau oder durch Herstellung des Polypropylens mittels geeigneter Metallocenkatalysatoren.

Zusätzlich kann die Basisschicht übliche Additive wie Neutralisationsmittel, Stabilisatoren, Antistatika und/oder Gleitmittel in jeweils wirksamen Mengen enthalten.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-(C₁-C₄)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%.

Gleitmittel sind höhere aliphatische Säureamide, höhere aliphatische Säureester, insbesondere mono-Glycerylester, und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-% in der Basisschicht, insbesondere Erucasäureamid und Stearylamid. Der Zusatz von Polydimethylsiloxanen ist im Bereich von 0,02 bis 3,0 Gew.-% bevorzugt, insbesondere Polydimethylsiloxane mit einer Viskosität von 5 000 bis 1 000 000 mm²/s.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische und phosphitische Stabilisatoren. Phenolische Stabilisatoren mit einer Molmasse von mehr als 500 g/mol werden bevorzugt, insbesondere Pentaerythrityl-Tetrakis-3-(3,5-di-Tertiärbutyl-4-Hydroxyphenyl)-Propionat oder 1,3,5-Trimethyl-2,4,6-triis(3,5-di-Tertiärbutyl-4-Hydroxybenzyl)benzol. Als phosphitische Stabilisatoren kommen Ultranox 626, Irgafos 168 und Weston 619 in Betracht, bevorzugt wird Irgafos 168. Dabei werden phenolische Stabilisatoren allein in einer Menge von 0,1 bis 0,6 Gew.-%, insbesondere 0,1 bis 0,3 Gew.-%, phenolische und phosphitische Stabilisatoren im Verhältnis 1 : 4 bis 2 : 1 und in einer Gesamtmenge von 0,1 bis 0,4, insbesondere 0,1 bis 0,25 eingesetzt.

Neutralisationsmittel sind vorzugsweise Dihydrotalcit, Calciumstearat und/oder Calciumcarbonat einer mittleren Teilchengröße von höchstens 0,7 µm, einer maximalen Teilchengröße von kleiner 10 µm und einer spezifischen Oberfläche von mindestens 40 m²/g.

Die vorstehenden Angaben in % beziehen sich jeweils auf das Gewicht der Basisschicht.

Die Deckschicht oder die Deckschichten der erfindungsgemäßen Releasefolie ist aus olefinischen Polymeren aufgebaut und enthält im allgemeinen 70 bis 100 Gew.-% der olefinischen Polymeren, vorzugsweise 85 bis <100Gew.-%

Beispiele für geeignete olefinische Polymere sind
ein Propylenhomopolymere
ein Copolymer von
   Ethylen und Propylen oder
   Ethylen und Butylen-1 oder
   Propylen und Butylen-1 oder
ein Terpolymer von
   Ethylen und Propylen und Butylen-1 oder
eine Mischung oder ein Blend aus zwei oder mehreren der genannten Homo-, Co- und Terpolymeren oder
wobei insbesondere
statistische Ethylen-Propylen-Copolymere mit
   einem Ethylengehalt von 1 bis 10 Gew.-%, bevorzugt 2,5 bis 8 Gew.-%, oder
statistische Propylen-Butylen-1-Copolymere mit
   einem Butylengehalt von 2 bis 25 Gew.-%, bevorzugt 4 bis 20 Gew.-%, jeweils bezogen auf das Gesamtgewicht des Copolymeren, oder statistische Ethylen-Propylen-Butylen-1-Terpolymere mit
   einem Ethylengehalt von 1 bis 10 Gew.-%, bevorzugt 2 bis 6 Gew.-%, und
   einem Butylen-1-Gehalt von 2 bis 20 Gew.-%, bevorzugt 4 bis 20 Gew.-%, jeweils bezogen auf das Gesamtgewicht des Terpolymeren, oder
ein Blend aus einem Ethylen-Propylen-Butylen-1-Terpolymeren und einem Propylen-Butylen-1-Copolymeren
   mit einem Ethylengehalt von 0,1 bis 7 Gew.-%
   und einem Propylengehalt von 50 bis 90 Gew.-%
   und einem Butylen-1-Gehalt von 10 bis 40 Gew.-%,
   jeweils bezogen auf das Gesamtgewicht des Polymerblends,
bevorzugt sind.

Die in der/den Deckschicht/-en eingesetzten vorstehend beschriebenen Co- und/oder Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen.

Das in der/den Deckschicht/-en eingesetzte Propylenhomopolymer weißt im allgemeinen einen Schmelzflußindex von 1,5 bis 15 g/10 min, vorzugsweise von 3 bis 10 g/10 min, auf. Der Schmelzpunkt liegt im Bereich von 140 bis 170 °C. Bevorzugte sind isotaktische Propylenhomopolymere. Alle vorstehend angegebenen Schmelzflußindices werden bei 230 °C und einer Kraft von 21,6 N (DIN 53 735) gemessen.
Gegebenenfalls können der/den Deckschicht/-en die vorstehend für die Basisschicht beschrieben Additive wie Antistatika, Neutralisationsmittel, Gleitmittel und/oder Stabilisatoren, sowie gegebenenfalls zusätzlich Antiblockmittel zugesetzt werden. Die Angaben in Gew.-% beziehen sich dann entsprechend auf das Gewicht der Deckschicht.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanamin-formaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,8 Gew.-%. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind.

In den Ausführungsformen mit beidseitigen Deckschicht können die Deckschichten aus den gleichen oder aus verschiedenen der vorstehend beschriebenen Polymeren aufgebaut sein.

Für die äußere Deckschicht (Releaseseite) sind Propylenhomopolymere bevorzugt, während für die innere Deckschicht (Laminierseite) vorzugsweise die beschriebenen Propylenco- und/oder Terpolymeren eingesetzt werden.

In einer bevorzugten Ausführungsform besteht die äußere Deckschicht (Releaseseite) aus einem Propylenhomopolymeren mit einen Schmelzflußindex von 4 bis 10 g/10 min und enthält ein Polyethylenwachs mit einer Molmasse von 400 bis 2500 und mit einer Polydispersität Mw/Mn von 1 bis 2 und mit einem Schmelzpunkt von 80 bis 100°C. Vorzugsweise werden dieser wachshaltigen Deckschicht 0,05 bis 0,2 % geeigneter Antioxidantien zugesezt, sowie 0,03 % Dihydrotalcit DHT4A. Insbesondere enthält diese Deckschicht zusätzlich 0,1 bis 1,0 Gew.-% Antiblockmittel vorzugsweise auf Basis weitgehend kugelförmiger Siliciumdioxid-Partikel mit einer mittleren Teilchengröße zwischen 2 und 10 µm, vorzugsweise 3 bis 6 µm.

Die erfindungsgemäße Releasefolie umfaßt die vorstehend beschriebenen Schichten. Unter der Basisschicht wird dabei im Sinne der vorliegenden Erfindung diejenige Schicht verstanden, welche die größte Schichtdicke aufweist und im allgemeinen mindestens 40% der Gesamtdicke ausmacht. Deckschichten sind die außenliegenden Schichten, deren Dicke im allgemeinen größer als 0,1 µm ist. Vorzugsweise beträgt die Dicke der Deckschichten 0,3 bis 3 µm, insbesondere 0,4 bis 1,5 µm, wobei beidseitige Deckschichten gleich oder verschieden dick sein können. Die Zwischenschicht/en sind naturgemäß zwischen der Basisschicht und der Deckschicht angebracht. Die Zwischenschichten sind im allgemeinen zwischen 0,5 und 15µm dick, vorzugsweise 1,0 bis 10µm.
Die Gesamtdicke der erfindungsgemäßen Releasefolie kann innerhalb weiter Grenzen variieren und richtet sich nach dem beabsichtigten Einsatz. Sie beträgt vorzugsweise 4 bis 80 µm, insbesondere 5 bis 60 µm, insbesondere 6 bis 25 µm, wobei die Basisschicht vorzugsweise 60 bis 99 % der Gesamtdicke der erfindungsgemäßen Releasefolie ausmacht.

Die Erfindung betrifft weiterhin ein Verfahren zur Herstellung der erfindungsgemäßen Releasefolie nach dem an sich bekannten Coextrusionsverfahren.

Im Rahmen dieses Verfahrens wird so vorgegangen, daß die Materialien für die einzelnen Schichten der Folie mit Hilfe von zwei bis vier oder mehr Extrudern aufgeschmolzen und die entsprechenden Schmelzen gemeinsam durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona-, plasma- oder flammbehandelt wird.

Die biaxiale Streckung (Orientierung) in Längs- bzw. Querrichtung wird simultan oder aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist].

Zunächst wird wie beim Coextrusionsverfahren üblich das Polymere bzw. die Polymermischung der einzelnen Schichten in jeweils einem Extruder komprimiert und verflüssigt, wobei die gegebenenfalls zugesetzten Additive bereits im Polymer bzw. in der Polymermischung enthalten sein können. Das Wachs wird vorzugsweise über ein schmelzehomogenisiertes Compound oder Masterbatch in die jeweilige Schicht eingearbeitet. Die Schmelzen werden dann gleichzeitig aufeinander geschichtet durch eine Flachdüse (Breitschlitzdüse) gepreßt, und die ausgepreßte mehrschichtige Folie wird auf einer oder mehreren Abzugswalzen bei einer Temperatur von 10 bis 100 °C, vorzugsweise 20 bis 50°C, abgezogen, wobei sie abkühlt und sich verfestigt.
Die so erhaltene Vorfolie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnell laufender Walzen durchführen, wobei die Streckung bei einer Temperatur von 80 bis 150°C und mit einem Streckverhältnis im Bereich von 4 bis 8 vorzugsweise 5 bis 6 durchgeführt wird. Das Querstrecken erfolgt bei einer Temperatur von 120 bis 170°C mit Hilfe eines entsprechenden Kluppenrahmens, wobei die Querstreckverhältnisse im Bereich von 5 bis 10, vorzugsweise 7 bis 9 liegen.
An die biaxiale Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.
Vorzugsweise wird die innere (d.h. die zur Laminierung vorgesehene) Oberfläche der Folie nach der biaxialen Streckung nach einer der bekannten Methoden corona-, plasma- oder flammbehandelt. Die Behandlungsintensität liegt im allgemeinen im Bereich von 35 bis 50 mN/m, besonders bevorzugt zwischen 37 bis 45 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Die Releasefolie wird nach einem der nachfolgend beschriebenen Verfahren zu dem erfindungsgemäßen Laminat und der entsprechenden Verpackung aus dem Laminat weiterverarbeitet:

Zur Herstellung des Laminats wird eine ein- oder beidseitig druckvorbehandelte Basisfolie ausgewählt und vorzugsweise auf einer oder der druckvorbehandelten Seite mit handelsüblichen Druckfarben bedruckt. Anschließend wird auf diese bedruckte Seite mit Hilfe handelsüblicher Laminierkleber die Releasefolie mit deren Innenseite auflaminiert. Abschließend erfolgt der Auftrag des Kaltsiegelklebers auf der zweiten Oberfläche der Basisfolie. Je nach Art des Kaltsieglklebers kann auch diese zweite Oberfläche der Basisfolie vorbehandeln sein. Dies richtet sich nach den Verarbeitungsvorschriften für den Kaltsiegelkleber. Das bedruckte und mit Kaltsiegelkleber beschichtete Laminat wird zur Rolle aufgewickelt und anschließend zur Verpackung weiterverarbeitet.

Grundsätzlich kommt auch das sogenannte reverse print-Verfahren in Betracht, bei welchem nicht die Basisfolie, sondern die erfindungsgemäße Releasefolie mittels sogenanntem Reverse-Print auf ihrer Innenseite bedruckt wird. Ansonsten wird hinsichtlich des Laminierverfahrens und des Kaltsiegelauftrags analog wie oben beschrieben verfahren.

Als Basisfolien kommen je nach Anwendungszweck verschiedene Folien in Betracht So eignen sich als Basisfolie sowohl transparente, metallisierte, weiß eingefärbte oder opake biaxial orientierte Polypropylenfolien gleichermaßen wie auch biaxial orientierte Polyethylenterephthalat-Folien, Polyethylenfolien und auch Polypropylen-Gießfolien, die je nach dem einzusetzenden Kaltsiegelkleber beidseitig oder nur auf der zu bedruckenden Außenseite einseitig druckvorbehandelt sind. Die Verwendung der erfindungsgemäßen Releasefolie ist nicht auf die genannten Basisfolientypen beschränkt. Die erfindungsgemäße Releasefolie kann überall dort vorteilhaft eingesetzt werden, wo eine Basis-oder Trägerfolie auf der Außenseite mit einer Haftschicht versehen wird, welche beim Aufwickeln eine zu starke Haftung zur gegenüberliegenden Oberfläche entwickelt. Bevorzugte Ausführungsformen für die Basisfolie sind transparente, metallisierte, weiß eingefärbte oder opake biaxial orientierte Polypropylenfolien, die an sich im Stand der Technik bekannt sind

Die Basisfolie kann mit einer Vielzahl unterschiedlicher Farbsysteme nach den unterschiedlichsten Verfahren bedruckt werden. So eigenen sich sowohl Ein- wie ZweiKomponenten-Systeme. Zu den Ein-Komponenten-Farbsystemen gehören solche auf Basis Polyvinylbutyral, Nitrocellulose und Celluloseacetatpropionat, zu den ZweiKomponenten-Farbsystemen solche auf Basis Epoxyharzen und Polyurethanharzen. Dabei kann der Einsatz von Primem oder Haftvermittlern zur Verbesserung der Farbhaftung von Vorteil sein.

Die Laminierung der Basisfolie mit der erfindungsgemäßen Releasefolie kann sowohl mit lösemittelhaltigen wie auch mit lösemittelfreien Laminierklebem erfolgen

Ferner kommt die sogenannte Extrusions-laminierung in Betracht. Bei diesem Verfahren werden Basis- und Releasefolie nach dem Druckvorgang miteinander verbunden in dem zwischen die zu laminierenden Folien ein geeigneter, niedrig schmelzender thermoplastischer Kunststoff in einer dünnen Schicht extrudiert wird und die beiden Folien mit der dazwischenliegenden Kunststoffschmelze fest aufeinander gepreßt werden. Beim Erstarren des thermoplastischen Kunststoffs werden die beiden Folien mit diesem und damit miteinander fest verbunden. Das Verfahren der Extrusionslaminierung ist im Stand der Technik an sich bekannt. Vorzugsweise werden Polyethylene in der Extrusionslaminierung als Kunststoffschmelze eingesetzt.

Als Kaltsiegelkleber kommen eine große Zahl von marktgängigen Kaltsiegelklebern in Betracht. Solche Kaltsiegelkleber können auf Basis von Naturlatizes, wie auch auf Basis von synthetischen Latizes oder durch Kombination natürlicher und synthetischer Latizes hergestellt werden, die sich bezüglich der eingesetzten Suspensionsmittel, der vorgeschriebenen Verarbeitungsbedingungen, der Lagerstabilität, der Verankerung auf der Trägerfolie und der Siegelnahtfestigkeiten sowie durch die für die Siegelung erforderlichen Siegeldrücke und -temperaturen unterscheiden. Geeignet sind unter anderen die Kaltsiegelkleber der Firmen Croda, Swale, Atofindley 1592, 1380 und ähnliche. Der Einsatz und die vorteilhafte Releasewirkung der erfindungsgemäßen Folie ist jedoch keineswegs auf die angegebenen Kaltsiegelkleber beschränkt.

Grundsätzlich können die verschiedenen Verarbeitungsschritte zur Herstellung des erfindungsgemäßen Laminats in getrennten Arbeitsgängen durchgeführt werden. So kann z.B. die Herstellung des Verbundes unabhängig von der Bedruckung wie auch unabhängig von dem Auftrag des Kaltsiegelklebers erfolgen. Bevorzugt werden jedoch Verfahren, in denen möglichst mehrere oder alle der genannten Schritte in einem Arbeitsgang ausgeführt werden können. In jedem Fall ist es erforderlich, den Kaltsiegelkleber erst nach der Laminierung zum Verbund aufzutragen, um ein Verblocken der bedruckten und beschichteten Basisfolie zu vermeiden.

Zur Charakterisierung der Rohstoffe und der Folien wurden die folgenden Meßmethoden benutzt:

### Schmelzflußindex

Der Schmelzflußindex wurde nach DIN 53 735 bei 21,6 N Belastung und 230 °C gemessen.

### Schmelzpunkt

DSC-Messung, Maximum der Schmelzkurve, Aufheizgeschwindigkeit 20 °C/min.

### Oberflächenspannung

Die Oberflächenspannung wurde mittels der sogenannten Tintenmethode (DIN 53 364) bestimmt.

### Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

### Messung des Blockverhaltens

Eine oder mehrere Folienproben, die auf ihre Release-Eigenschaften hin untersucht werden sollen, werden im Wechsel mit einem Folienmuster, das an seiner Oberfläche mit Kaltsiegelkeber beschichtet ist, so aufgestapelt, daß die Außenseite (Releaseseite) der zu prüfenden Foilienprobe mit dem Kaltsiegelkleber im Kontakt ist. Um die ggf. miteinander verblockenden Foilenstücke in die Zugprüfmachine einspannen zu können, wird dabei jeweils ein wenige Zentimeter breiter Streifen mittels z.B. Papier abgedeckt. Trägt die Folienprobe selbst oder ein daraus hergestellter Verbund den Kaltsiegelkleber, so wird jede zweite Kontaktfläche komplett abgedeckt, um die Folienproben zwecks Messung vereinzeln zu können.

Der Stapel von Proben wird mittels einer Kipphebelpresse unter einem Druck von 100 N/cm² bei Zimmertemperatur 24 Std gepreßt. Danach werden die Folienproben vereinzelt, in 30 mm breite Streifen geschnitten und so in einer Zugprüfmaschine (z.B. Zwick) eingespannt, daß die Releasefolie und die Basisfolie, die auf ihrer Oberfläche mit Kaltsiegelkeber beschichtet ist, unter einem Winkel von zweimal 90° voneinander getrennt werden. Dabei wird die Kraft gemessen, die zur Trennung der Folienlagen benötigt wird. Der Mittelwert aus drei Messungen sowie das Ausmaß des ggf. eintretenden Übertrags von Kaltsiegelkleber auf die Releasefolie werden zur Bewertung herangezogen.

### Messung der Verankerung des Kaltsiegelklebers

Eine Probe der Releasefolie wird auf der Innenseite bedruckt und / oder mit einer bedruckten Basisfolie laminiert, anschließend wird die bedruckte Innenseite oder die Basisfolie des Verbundes gemäß den Verarbeitungsvorschriften mit Kaltsiegelkleber beschichtet und ggf. getrocknet und durch Lagerung reifen gelassen. Anschließend wird der Kaltsiegelkleber unter gleichmäßigem Druck mit einem Klebeband (z.B. Tesa oder Lithographie Größe 25mm Breite) in Kontakt gebracht, sodann das Klebeband und die Folienprobe, die auf ihre Release-Eigenschaften hin untersucht werden soll, in eine Zugprüfmaschine (z.B. Zwick, Materialprüfungsgerät Typ 1120,25) eingespannt, so daß dieselben unter einem Winkel von zweimal 90° voneinander getrennt werden. Dabei wird die Kraft gemessen, die zur Trennung von Klebeband und Verbund benötigt wird. Der Mittelwert aus drei Messungen sowie das Ausmaß des ggf. eintretenden Übertrags von Kaltsiegelkleber auf das Klebeband werden zur Bewertung herangezogen.

### Messung der Siegelnahtfestigkeit des Kaltsiegelklebers

Eine Probe der Releasefolie wird auf der Innenseite bedruckt und / oder mit einer bedruckten Basisfolie laminiert, anschließend wird die Innenseite des Verbundes gemäß den Verarbeitungsvorschriften mit Kaltsiegelkleber beschichtet und ggf. getrocknet und durch Lagerung reifen gelassen. Anschließend werden die mit Kaltsiegelkleber bedeckten Folienoberflächen bis auf einen wenige Zentimeter breiten Streifen zum Einspannen in die Prüfmaschine bei den dem Verwendungszweck und den Verarbeitungsbedingungen des Herstellers entsprechenden Temperaturen unter ... N/cm² Druck miteinander in Kontakt gebracht und verschweißt, in 15 mm breite Streifen geschnitten, dieselben mittels der unverschweißten Enden in eine Zugprüfmaschine (z.B. Zwick, Materialfprüfungsgerät Typ 1120,25) eingespannt, so daß dieselben unter einem Winkel von zweimal 90° voneinander getrennt werden. Dabei wird die Kraft gemessen, die zur der beiden Verbundlagen benötigt wird. Der Mittelwert aus drei Messungen werden zur Bewertung herangezogen.

### Molekulargewichtsbestimmung

Die mittleren Molmassen Mw und Mn und die mittlere Molmassen-Dispersität Mw/Mn wurden in Anlehnung an DIN 55 672, Teil 1, mittels Gelpermeationschromatographie bestimmt. Anstelle von THF wurde als Elutionsmittel Orthodichlorbenzol verwendet. Da die zu untersuchenden olefinischen Polymeren bei Raumtemperatur nicht löslich sind, wird die gesamte Messung bei erhöhter Temperatur (≈135 °C) durchgeführt.

### Beispiel 1

Durch Coextrusion und anschließende stufenweise Orientierung in Längs- und Querrichtung wurde eine transparente dreischichtige Folie bestehend aus der Basisschicht B und den Deckschichten A und C mit einer Gesamtdicke von 20 µm hergestellt. Die Deckschichten A und C hatten eine Dicke von jeweils 0,6 µm.

### B Basisschicht

| | |
|---|---|
| 99,75 Gew.-% | Propylenhomopolymer mit einem Schmelzpunkt von 165 °C und einem Schmelzflußindex von 3,4 g/10min, einem n-heptanunlöslicher Anteil von 94 % hatte und mit je 0,07 % Irganox 1010 und Irgafos 168 sowie 0,03% DHT stabilisiert w |
| 0,15 Gew.-% | Erucasäureamid |
| 0,12 Gew.-% | N,N-bis-ethoxyalkylamin (Antistatikum) |

äußere Deckschicht:

| | |
|---|---|
| 98,67 Gew.-% | Propylenhomopolymer mit einem Schmelzpunkt von 165 °C und einem Schmelzflußindex von 7,6 g/10min. einem n-heptanunlöslicher Anteil von 94 % hatte und mit je 0,07 % Irganox 1010 und Irgafos 168 sowie 0,03% DHT stabilisiert |
| 1,0 Gew.-% | Polyethylenwachs mit einem mittleren Molekulargewicht Mn von 2000 und Molekulargewichtsverteilung Mw/Mn von 1,08 |
| 0,33 Gew.-% | SiO₂ als Antiblockmittel mit einer mittleren Teilchengröße von 2 µm |

innere Deckschicht:

| | |
|---|---|
| 99,8 Gew.-% | statistische Ethylen-Propylen-Butylen-Terpolymer mit einem Ethylengehalt von 3 Gew.-% und einem Butylengehalt von 7 Gew.-% (Rest Propylen) und einem Schmelzflußindex von 7,3 g/10min und mit je 0,07 % Irganox 1010 und Irgafos 168 sowie 0,03% DHT stabilisiert. |
| 0,1 Gew.-% | Erucasäureamid |
| 0,1 Gew.-% | SiO₂ als Antiblockmittel mit einer mittleren Teilchengröße von 3 µm |

Die Herstellungsbedingungen in den einzelnen Verfahrensschritten waren:

| | | |
|---|---|---|
| Extrusion: | Temperaturen Basisschicht: | 250 °C |
| | Deckschichten: | 250 °C |
| | Temperatur der Abzugswalze: | 20 °C |
| Längsstreckung: | Temperatur | 110 °C |
| | Längsstreckverhältnis: | 5,5 |
| Querstreckung: | Temperatur: | 170 °C |
| | Querstreckverhältnis: | 9 |
| Fixierung: | Temperatur: | 150 °C |
| | Konvergenz: | 10 % |

Bei dem Querstreckverhältnis λ_{Q} = 9 handelt es sich um einen Effektivwert. Dieser Effektivwert berechnet sich aus der Endfolienbreite B, reduziert um die zweifache Säumstreifenbreite b, dividiert durch die Breite der längsgestreckten Folie C, ebenfalls um die zweifache Säumstreifenbreite b reduziert.

### Beispiel 2

Die Folie, die wie in Beispiel 1 beschrieben hergestellt wurde, wurde anschließend als Releasefolie mit einer weiß opaken Basisfolie zu einem Folienverbund verarbeitet. Als Basisfolie wurde Trespaphan SHD eingesetzt. Dies ist eine vierschichtige weiß opake boPP Folie mit CaCO3 und TiO2 in der Basisschicht und einer Glanzwischenschicht aus Propylenhomopolymer. Die Basisfolie SHD wurde beidseitig druckvorbehandelte. und auf ihrer glänzenden (Außen-)Seite mit einer Druckfarbe auf Nitrocellulose-Basis (MX57) vollflächig bedruckt, nach Auftragung eines lösemittelfreien Zwei-Komponenten-PU-Klebers auf die Druckfarbe mit der druckvorbehandelten Innen-seite der Releasefolie nach Beispiel 1 laminiert. Der so hergestellte Folienverbund wurde af der Innenseite vollflächig mit verschiedenen Kaltsiegelklebern wie in der unten stehenden Tabelle angegeben beschichtet. Die beschichteten Verbundfolien wurde aufgerollt und bis zur Ausprüfung gelagert. Die Prüfergebnisse sind in Tabelle 1 zusammengefaßt.

### Beispiele 3 bis 9

Entsprechend den in Beispiel 1 angegebenen Bedingungen wurden Releasefolien hergestellt, wobei in der äußeren Deckschicht verschiedene Wachse in wechselnden Anteilen wie in Tabelle 1 angegeben verwendet wurden. Der Anteil an Propylen-Homopolymer mit einem Schmelzflußindex von 7,6g/10min wurde dabei so gewählt, daß die Summe der Anteile der verschiedenen Wachse und des Propylen-Homopolymers jeweils 99,67 Gew.-% ergab.
Die Folienmuster wurden unter den in Beispiel 2 beschriebenen Bedingungen mit Trespaphan SHD zu einem Folienverbund verarbeitet und der so hergestellte Verbund jeweils wie in Tabelle 1 angegeben mit verschiedenen Kaltsiegelklebern beschichtet.

### Beispiel 10

Durch Coextrusion und anschließende stufenweise Orientierung in Längs- und Querrichtung wurde eine transparente vierschichtige Folie bestehend aus der Basisschicht B, den Deckschichten A und C und der Zwischenschicht D zwischen der Basisschicht und der Deckschicht A mit einer Gesamtdicke von 20 µm hergestellt. Die Deckschichten A und C hatten eine Dicke von jeweils 0,6 µm, die Zwischenschicht D eine Dicke von 3 µm.

### B Basisschicht

| | |
|---|---|
| 99,75 Gew.-% | Propylenhomopolymer mit einem Schmelzpunkt von 165 °C und einem Schmelzflußindex von 3,4 g/10min, einem n-heptanunlöslicher Anteil von 94 % hatte und mit je 0,07 % Irganox 1010 und Irgafos 168 sowie 0,03% DHT stabilisiert w |
| 0,15 Gew.-% | Erucasäureamid |
| 0,12 Gew.-% | N,N-bis-ethoxyalkylamin (Antistatikum) |

### A äußere Deckschicht:

| | |
|---|---|
| 99,67 Gew.-% | Propylenhomopolymer mit einem Schmelzpunkt von 165 °C und einem Schmelzflußindex von 7,6 g/10min. einem n-heptanunlöslicher Anteil von 94 % hatte und mit je 0,07 % Irganox 1010 und Irgafos 168 sowie 0,03% DHT stabilisiert |
| 0,33 Gew.-% | SiO₂ als Antiblockmittel mit einer mittleren Teilchengröße von 2 µm |

### D Zwischenschicht:

| | |
|---|---|
| 85 Gew.-% | Propylenhomopolymer mit einem Schmelzpunkt von 165 °C und einem Schmelzflußindex von 7,6 g/10min. einem n-heptanunlöslicher Anteil von 94 % hatte und mit je 0,07 % Irganox 1010 und Irgafos 168 sowie 0,03% DHT stabilisiert |
| 15 Gew.-% | Chevronwachs 143 |

### C innere Deckschicht

| | |
|---|---|
| 85 Gew.-% | statistische Ethylen-Propylen-Butylen-Terpolymer mit einem Ethylengehalt von 3 Gew.-% und einem Butylengehalt von 7 Gew.-% (Rest Propylen) und einem Schmelzflußindex von 7,3 g/10min und mit je 0,07 % Irganox 1010 und Irgafos 168 sowie 0,03% DHT stabilisiert war. |
| 0,1 Gew.-% | Erucasäureamid |
| 0,1 Gew.-% | SiO₂ als Antiblockmittel mit einer mittleren Teilchengröße von 3 µm |

Die Herstellungsbedingungen in den einzelnen Verfahrensschritten waren:

| | | | |
|---|---|---|---|
| Extrusion: | Temperaturen | Basisschicht: | 250 °C |
| | | Zwischenschicht | 250 °C |
| | | Deckschichten: | 250 °C |

Alle weiteren Bedingungen entsprachen denen, die in Beispiel 1 angegeben wurden.

Die so hergestellte Releasefolie wurde unter den in Beispiel 2 beschriebenen Bedingungen mit Trespaphan SHD zu einem Folienverbund verarbeitet und der so hergestellte Verbund jeweils wie in Tabelle 1 angegeben mit verschiedenen Kaltsiegelklebern beschichtet.

### Beispiel 11

Entsprechend den in Beispiel 7 angegebenen Bedingungen wurde ein Folienmuster hergestellt, wobei das Homopolymer in der äußeren Deckschicht durch ein Propylen-Ethylen-Copolymer mit 6 Gew.-% Ethylen ersetzt wurde.
Das Folienmuster wurde unter den in Beispiel 2 beschriebenen Bedingungen zu einem Folienverbund verarbeitet und der so hergestellte Verbund jeweils wie in Tabelle 1 angegeben mit verschiedenen Kaltsiegelklebern beschichtet.

### Beispiel 12

Entsprechend den in Beispiel 7 angegebenen Bedingungen wurde ein Folienmuster hergestellt, wobei das Homopolymer in der äußeren Deckschicht durch ein Propylen-Ethylen-Butylen-Copolymer mit 2 Gew.-% Ethylen und 6 Gew.-% Butylen ersetzt wurde.
Das Folienmuster wurde unter den in Beispiel 2 beschriebenen Bedingungen zu einem Folienverbund verarbeitet und der so hergestellte Verbund jeweils wie in Tabelle 1 angegeben mit verschiedenen Kaltsiegelklebern beschichtet.

### Beispiel 13

Entsprechend den in Beispiel 7 angegebenen Bedingungen wurde ein Folienmuster hergestellt, wobei das Homopolymer durch ein Blend aus 98,8 Gew.-% Propylen-Homopolymer und 1,2 Gew.-% Polydimethylsiloxan (Viskosität 30.000 centi-Stokes) ersetzt wurde.
Das Folienmuster wurde unter den in Beispiel 2 beschriebenen Bedingungen zu einem Folienverbund verarbeitet und der so hergestellte Verbund jeweils wie in Tabelle 1 angegeben mit verschiedenen Kaltsiegelklebern beschichtet.

### Beispiele 14 bis 16

Entsprechend den in Beispiel 7 angegebenen Bedingungen wurden Folienmuster hergestellt, wobei statt des Polywax 655 das Polywax 1000 zum Einsatz kam.
Die Folienmuster wurden unter den in Beispiel 2 beschriebenen Bedingungen zu einem Folienverbund verarbeitet, wobei zur Herstellung des Verbundes wie in Tabelle 2 angegeben verschiedene Laminierkleber zum Einsatz kamen. Die so hergestellten Verbundfolien wurden jeweils wie in Tabelle 2 angegeben mit verschiedenen Kaltsiegelklebern beschichtet.

### Beispiel 17

Entsprechend den in Beispiel 7 angegebenen Bedingungen wurde ein Folienmuster hergestellt.
Das Folienmuster wurde als Releasefolie unter Verwendung einer metallisierten biaxial orientierten Polypropylenfolie (Trespaphan SCM) als Basisfolie nach dem Extrusions-Laminationsverfahren zu einem Folienverbund verarbeitet. Hierzu wurde die Releaefolie nach dem reverse print-Verfahren mit einem Streifenmuster unterschiedlicher Farbauftragsstärke mit PVB-Farbe bedruckt und unter Zuführung von 4 g/qm Polyethylen niedriger Dichte bei 220 °C Schmelzetemperatur mit der metallbedampften Seite der metallisierten Folie laminiert. Der so entstandene Verbund wurde auf der Innenseite bei einer Flammtemperatur von 780 °C mit Erdgas flammbehandelt. Die so hergestellten Verbundfolien wurden jeweils wie in Tabelle 2 angegeben mit verschiedenen Kaltsiegelklebern beschichtet.

### Vergleichsbeispiel 18

Entsprechend den in Beispiel 1 angegebenen Bedingungen wurde ein Folienmuster hergestellt, wobei in der äußeren Deckschicht ein Gemisch aus 99,67 Gew-% des dort beschriebenen Propylen-Homopolymers und 0,33 Gew.-% SiO₂ als Antiblockmittel eingesetzt wurde.
Das Folienmuster wurde unter den in Beispiel 2 beschriebenen Bedingungen zu einem Folienverbund verarbeitet und der so hergestellte Verbund jeweils wie in Tabelle 2 angegeben mit verschiedenen Kaltsiegelklebern beschichtet.

### Vergleichsbeispiel 19

Entsprechend den in Vergleichsbeispiel 18 angegebenen Bedingungen wurde ein Folienmuster hergestellt, wobei das Homopolymer durch ein Blend aus 98,8 Gew.-% Propylen-Homopolymer und 1,2 Gew.-% Polydimethylsiloxan (Viskosität 30.000 centi-Stokes) bezogen auf den Homopolymeranteil ersetzt wurde.
Das Folienmuster wurde unter den in Beispiel 2 beschriebenen Bedingungen zu einem Folienverbund verarbeitet und der so hergestellte Verbund jeweils wie in Tabelle 2 angegeben mit verschiedenen Kaltsiegelklebern beschichtet.

### Beispiel 20

Entsprechend den in Beispiel 7 angegebenen Bedingungen wurde ein Folienmuster hergestellt, jedoch wurde der Ausstoß des Extruders, der die Schmelze für die Herstellung der Basisschicht bereitstellt, so eingestellt, daß die Gesamtdicke der Folie 35 µm betrug..
Das Folienmuster wurde nach dem reverse print-Verfahren mit einem Streifenmuster unterschiedlicher Farbauftragsstärke mit PVB-Farbe bedruckt und ohne Laminierung zu einer Mono-Verpackungsfolie verarbeitet und geteilt.
Die so hergestellten Mono-Verpackungsfolie wurde jeweils wie in Tabelle 2 angegeben mit verschiedenen Kaltsiegelklebern beschichtet.

### Beispiele 21 bis 22

Entsprechend den in den Beispielen 14 bis 16 angegebenen Bedingungen wurden Folienmuster hergestellt.
Die Folienmuster wurden unter den in Beispiel 2 beschriebenen Bedingungen zu einem Folienverbund verarbeitet, wobei zur Herstellung des Verbundes der Laminierkleber [PU] zum Einsatz kam. Die so hergestellten Verbundfolien wurden jeweils direkt ohne Zwischenlagerung unter Verwendung der in Tabelle 1 angegeben Kaltsiegelkleber beschichtet.

**Tabelle 1: Jewelis laminiert mit SHH mit MX57-Druckfarbe bedruckt und mit PU-Kleber ....... laminiert**

| **Beispiel** | **Wachs** | **Anteil in äußerer Deckschicht** | **Croda 22-392** | **Croda 22-272** | **Swale IP 4180 2)** | **Atofindley CX-7117** | **Atofindley C-1381** |
|---|---|---|---|---|---|---|---|
| B1, B2 | Polywax 2000 | 1,0 % | B = 0,7 | B = 0,5 | B = 0,4 | B = 0,2 | B = 0,5 |
| B3 | Polywax 2000 | 5 % | B = 0,8 | B = 0,2 | B = 0,1 | B = 0,3 | B = 0,4 |
| B4 | Polywax 2000 | 20 % | B = 0,6 | B = 0,2 | B = 0,0 | B = 0,1 | B = 0,5 |
| B5 | Polywax 500 | 1,0 % | B = 0,7 | B = 0,6 | B = 0,0 | B = 0,5 | B = 0,3 |
| B6 | Polywax 500 | 0,5 % | B = 1,0 | B = 0,6 | B = 0,4 | B = 0,8 | B = 0,9 |
| B7 | Polywax 655 | 1,0 % | B = 0,7 | B = 0,5 | B = 0,4 | B = 0,2 | B = 0,5 |
| B8 | Multiwax 445 | 10% | B = 0,8 | B = 0,7 | B = 0,9 | B = 0,3 | B = 0,2 |
| B9 | Polywax 1000 | 15 % 3) | B = 0,9 | B = 0,2 | B = 0,3 | B = 0,0 | B = 0,2 |
| B10 | Chevronwachs 143 | 15 % 3) | B = 0,9 | B = 0,8 | B = 0,6 | B = 0,6 | B = 0,9 |
| B11 | Polywax 655 | 1 % 4) | B = 0,9 | B = 0,6 | B = 0,6 | B = 0,5 | B = 0,9 |
| B12 | Polywax 655 | 1 % 5) | B = 0,5 | B = 0,6 | B = 0,3 | B = 0,3 | B = 0,7 |
| B13 | Polywax 655 | 1 % 6) | B = 0,5 | B = 0,5 | B = 0,2 | B = 0,1 | B = 0,3 |
| B21 | Polywax 1000 | 1,0% | B = 0,8 | | | | |
| | | | V = 3,1 | | | | |
| | | | S =1,9 | | | | |
| B22 | Polywax 1000 | 1,0 % | | | | | B = 1,0 |
| | | | | | | | V = 3,5 |
| | | | | | | | S= 2,2 |

| | | | | | | | |
|---|---|---|---|---|---|---|---|
| 1) "B" = Blockkraft, "V" = Verankerung, "S" = Siegelnahtfestigkeit 2) auf SHD / die Innenseite der Basisfolie war nicht druckvorbehandelt 3) in Zwischenschicht 4) in C3/C2-Copo 5) in C3C2C4-Terpo 6) in Homo mit Siloxan B = Beispiel; VB = Vergleichsbeispiel | | | | | | | |

**Tabelle 2: Jeweils 1,0 % Polywax 1000 in der äußeren Deckschicht, laminiert auf SHH**

| **Beispiel** | **Laminierkleber** | | **Croda 22-392** | **Croda 22-272** | **Swale IP 4180 *)** | **Atofindley CX-7117** | **Atofindley C-1381** |
|---|---|---|---|---|---|---|---|
| B14 | PU | | B = 0,6 | B = 0,4 | B = 0,3 | B = 0,5 | B = 0,8 |
| | | | V = 3,2 | V = 2,7 | V = 2,7 | V = 2,6 | V = 3,3 |
| | | | S = 2,2 | S=1,9 | S = 2,1 | S = 1,8 | S = 2,4 |
| B15 | Epoxy | | B=0,7 | B = 0,4 | B = 0,3 | B = 0,4 | B = 0,7 |
| | | | V = 3,3 | V = 2,6 | V = 2,7 | V = 2,7 | V = 3,5 |
| | | | S = 2,1 | S = 1,8 | S = 1,8 | S = 2,0 | S = 2,1 |
| B16 | Lösemittel | | B = 0,8 | B = 0,5 | B = 0,2 | B = 0,1 | B = 0,6 |
| | | | V=2,8 | V=2,5 | V=2,4 | V=2,6 | V = 3,1 |
| | | | S = 2,3 | S = 1,9 | S = 2,0 | S = 1,9 | S = 1,8 |
| B17 | PE-LDTyp 1) | | B = 0,9 | B = 0,6 | B = 0,3 2) | B = 0,3 | B = 0,7 |
| | | | V = 3,1 | V = 2,8 | V = 2,9 | V = 2,8 | V = 3,1 |
| | | | S = 2,4 | S = 1,7 | S = 2,2 | S = 2,1 | S = 2,1 |
| VB18 | PU | | B = 1,1 | B = 1,3 | B = 0,4 | B = 0,5 | B = 2,8 |
| | | | V = 2,8 | V = 2,7 | V = 2,9 | V = 2,8 | V = 3,5 |
| | | | S = 2,1 | S = 1,8 | S = 1,9 | S=1,9 | S = 2,3 |
| VB19 | PU | 6) | B = 0,7/1,5 | B = 1,4/1,2 | B = 0,4/1,1 | B = 0,3/0,9 | B = 0,8/2,1 |
| | | | V = 2,5/2,6 | V = 2,5 | V = 2,6/2,2 | V = 2,7 | V = 3,0 / 2,4 |
| | | | S = 1,9/1,8 | S = 2,1 | S = 1,7/1,8 | S = 1,9 | S = 1,5/2,0 |
| B20 | ohne | | B = 0,6 | B = 0,4 | B = 0,3 | B = 0,5 | B = 0,8 |
| | | | V = 2,8 | V = 2,5 | V = 2,8 | V = 2,6 | V = 3,1 |
| | | | S = 2,1 | S = 1,7 | S = 2,3 7) | S = 1,6 | S = 2,1 7) |

| | | | | | | | |
|---|---|---|---|---|---|---|---|
| *) auf SHD 1) auf SCM 2) Verbund ohne Flammbehandlung 6) mit Siloxan 7) Verankerung teilweise versagt B = Beispiel; VB = Vergleichsbeispiel | | | | | | | |

## Patentansprüche

1. Verwendung einer mehrschichtigen biaxial orientierten Polyolefinfolie mit einer Innenseite und einer Außenseite als Releasefolie in einem Folienlaminat aus einer Basisschicht und mindestens einer äusseren Deckschicht und einer optionalen äußeren Zwischenschicht, **dadurch gekennzeichnet, dass** die Releasefolie in der Basisschicht und/oder in der äusseren Deckschicht und/oder in der äußeren Zwischenschicht ein Wachs enthält, wobei die zur Laminierung vorgesehene innere Schicht im wesentlichen frei von Wachs ist und die Folie auf der Innenseite mittels Plasma, Corona oder Flamme behandelt ist und auf der Außenseite nicht mittels Plasma, Corona oder Flamme behandelt ist.

2. Verwendung nach Anspruch 1, **dadurch gekennzeichnet, dass** die Releasefolie eine dreischichtige Folie ist und eine zweite innere Deckschicht aufweist und das Wachs in der Basisschicht enthalten ist.

3. Verwendung nach Anspruch 1 oder 2, **dadurch gekennzeichnet, dass** die Releasefolie eine äußeren Zwischenschicht aufweist und das Wachs in der äusseren Zwischenschicht enthalten ist.

4. Verwendung nach einem der Ansprüche 1 bis 3, **dadurch gekennzeichnet, dass** das Wachs in der äusseren Deckschicht der Releasefolie enthalten ist.

5. Verwendung nach einem der Ansprüche 1 bis 4, **dadurch gekennzeichnet, dass** das Wachs ein Polyethylenwachs oder einmakrokristallines Paraffin (Paraffinwachs) oder ein mikrokristallines Paraffin (Mikrowachs) mit einer Molmasse Mn von 200 bis 5000 ist.

6. Verwendung nach Anspruch 5, **dadurch gekennzeichnet, dass** das Wachs ein Polyethylenwachs mit Mw/Mn von 1 bis 2 ist.

7. Verwendung nach einem oder mehreren der Ansprüche 1 bis 6, **dadurch gekennzeichnet, dass** die Polyolefinfolie eine Polypropylenfolie ist.

8. Verwendung nach einem oder mehreren der Ansprüche 1 bis 7, **dadurch gekennzeichnet, dass** die äussere Deckschicht aus Propylenhomopolymer besteht.

9. Verwendung nach einem oder mehreren der Ansprüche 1 bis 8, **dadurch gekennzeichnet, dass** das Wachs in der wachshaltigen Schicht der Releasefolie in einer Konzentration von 0, 2 bis 20 Gew-%, bezogen auf das Gewicht der Schicht, enthalten ist.

10. Laminat aus einer polyolefinischen Basisfolie, welche mittels Kaschierkleber oder mittels Extrusionslaminierung mit einer Releasefolie laminiert ist, wobei die Releasefolie eine Innenseite und eine Außenseite aufweist, **dadurch gekennzeichnet, dass** die Basisfolie auf ihrer äusseren Oberfläche einen Kaltsiegelkleber aufweist und die Releasefolie mit ihrer Innenseite gegen die Basisfolie laminiert ist und in der Basisschicht und/oder in einer optionalen äusseren Zwischenschicht und/oder in der äusseren Deckschicht ein Wachs enthält und auf ihrer Außenseite nicht mittels Corona, Flamme oder Plasma behandelt und auf der Innenseite mittels Plasma, Corona oder Flamme behandelt ist

11. Laminat nach Anspruch 10, **dadurch gekennzeichnet, dass** die Basisfolie eine mehrschichtige biaxial orientierte Polypropylenfolie, eine Polyethylentherephtalaffolie, eine Giessfolie oder eine metallisierte Folie ist.

12. Laminat nach Anspruch 10 oder 11, **dadurch gekennzeichnet, dass** die Basisfolie auf ihrer inneren Oberfläche bedruckt ist.

13. Laminat nach Anspruch 10 oder 11, **dadurch gekennzeichnet, dass** die Relasefolie auf ihrer inneren Oberfläche mit einem Konterdruck versehen ist.

14. Verfahren zur Herstellung eines Laminats nach einem der Ansprüche 10 bis 13.

15. Verwendung eines Laminats nach einem der Ansprüche 10 bis 13 zur Herstellung einer Verpackung, wobei die Releasefolie die Aussenseite der Verpackung bildet.

16. Verpackung enthaltend ein Laminat nach einem der Ansprüche 10 bis 13.

## Claims

1. Use of a multilayered biaxially oriented polyolefin film as release film in a film laminate, said polyolefin film having an inside and an outside, and comprising a base layer and at least one outer top layer and an optionally outer interlayer layer, **characterized in that** the release film comprises a wax in the base layer and/or in the at least one outer top layer and/or in the outer interlayer layer, with the inner layer intended for lamination being essentially free from wax and with the surface on the inside of the release film being corona-, plasma- or flame-treated and with the surface on the outside of the release film being untreated.

2. Use according to Claim 1, **characterized in that** the release film is a three-layered film, and the wax is comprised in the base layer.

3. Use according to Claim 1, **characterized in that** the release film has an outer interlayer, and the wax is comprised in the outer interlayer.

4. Use according to Claim 1 or 3, **characterized in that** the wax is comprised in the outer top layer of the release film.

5. Use according to one of Claims 1 to 4, **characterized in that** the wax is a polyethylene wax or a macrocrystalline paraffin (paraffin wax) or a microcrystalline paraffin (microwax) having a molecular weight Mn of from 200 to 5000.

6. Use according to Claim 5, **characterized in that** the wax is a polyethylene wax having an Mw/Mn of from 1 to 2.

7. Use according to one or more of Claims 1 to 6, **characterized in that** the polyolefin film is a polypropylene film.

8. Use according to one or more of Claims 1 to 7, **characterized in that** the outer top layer consists of propylene homopolymer.

9. Use according to one or more of Claims 1 to 8, **characterized in that** the wax is present in the wax-containing layer of the release film in a concentration of from 0.2 to 20% by weight, based on the weight of the layer.

10. Laminate comprising a polyolefinic base film which is laminated with a release film by means of lamination adhesive or by means of extrusion lamination, **characterized in that** the release film has an inside and an outside and the base film has a cold-seal adhesive on its outer surface and the inside of the release film is laminated to the base film and the base layer and/or the at least one outer top layer and/or the optionally outer interlayer layer comprises a wax and the surface of the inside of the release film is corona-, plasma- or flame-treated and the surface of the outside of the release film is untreated.

11. Laminate according to Claim 10, **characterized in that** the base film is a multilayered biaxially oriented polypropylene film, a polyethylene terephthalate film, a cast film or a metallized film.

12. Laminate according to Claim 10 or 11, **characterized in that** the base film has been printed on its inner surface.

13. Laminate according to Claim 10 or 11, **characterized in that** the release film is provided with reverse printing on its inner surface.

14. Process for the production of a laminate according to one or more of Claims 10 to 13.

15. Use of a laminate according to one or more of Claims 10 to 13 for the production of packaging, where the release film forms the outside of the packaging.

16. Packaging comprising a laminate according to one or more of Claims 10 to 13.

## Revendications

1. Utilisation d'un film de polyoléfine multicouches orienté biaxialement, présentant une face interne et une face externe faisant fonction de film de séparation dans un laminat (film plastique) constitué d'une couche de base et d'au moins une couche de couverture extérieure ainsi que d'une couche intermédiaire extérieure optionnelle, **caractérisée en ce que** le film de séparation de la couche de base et/ou la couche de couverture extérieure et/ou la couche intermédiaire extérieure contient une cire, la couche interne prévue pour la plastification étant pour l'essentiel dépourvue de cire et la face interne du film étant traitée par plasma, effet couronne ou flamme, contrairement à sa face externe.

2. Utilisation selon la revendication 1, **caractérisée en ce que** le film de séparation est un film triple couche et présente une seconde couche de couverture intérieure et la cire est contenue dans la couche de base.

3. Utilisation selon la revendication 1 ou 2, **caractérisée en ce que** le film de séparation présente une couche intermédiaire extérieure et la cire est contenue dans la couche intermédiaire extérieure.

4. Utilisation selon l'une des revendications 1 à 3, **caractérisée en ce que** la cire est contenue dans la couche de couverture extérieure du film de séparation.

5. Utilisation selon l'une des revendications 1 à 4, **caractérisée en ce que** la cire est une cire de polyéthylène ou de la paraffine macrocristalline (cire paraffinique) ou de la paraffine microcristalline (micro-cire) dont la masse moléculaire est comprise entre 200 et 500 Mn.

6. Utilisation selon la revendication 5, **caractérisée en ce que** la cire est une cire de polyéthylène dont le rapport Mw/Mn (masse moléculaire moyenne en poids/masse moléculaire moyenne en nombre) est compris entre 1 et 2.

7. Utilisation selon l'une ou plusieurs des revendications 1 à 6, **caractérisée en ce que** le film de polyoléfine est un film de polypropylène.

8. Utilisation selon l'une ou plusieurs des revendications 1 à 7, **caractérisée en ce que** la couche de couverture extérieure se compose d'un homopolymère de propylène.

9. Utilisation selon l'une ou plusieurs des revendications 1 à 8, **caractérisée en ce que** la cire de la couche qui la contient dans le film de séparation présente une concentration de 0,2 à 20 % en poids par rapport au poids de la couche.

10. Laminat composé d'un film polyoléfinique de base, plastifié par un film de séparation via une méthode de contre-collage ou de plastification par extrusion, le film de séparation présentant une face interne et une face externe, **caractérisé en ce que** le film de base présente au niveau de sa surface extérieure une substance adhésive pour scellage à froid, et **en ce que** le film de séparation est plastifié par sa face interne contre le film de base et contient de la cire dans la couche de base et/ou dans une couche intermédiaire extérieure optionnelle et/ou dans la couche de couverture extérieure, sa face externe n'étant pas traitée par effet couronne, flamme ou plasma, contrairement à sa face interne.

11. Laminat selon la revendication 10, **caractérisé en ce que** le film de base est un film de polypropylène multicouches orienté biaxialement, un film de polyéthylène théréphtalate, un film coulé ou un film métallisé.

12. Laminat selon la revendication 10 ou 11, **caractérisé en ce que** le film de base présente une impression sur sa surface intérieure.

13. Laminat selon la revendication 10 ou 11, **caractérisé en ce que** le film de séparation présente une contre-impression sur sa surface intérieure.

14. Procédé de fabrication d'un laminat selon l'une des revendications 10 à 13.

15. Utilisation d'un laminat selon l'une des revendications 10 à 13 destiné à la fabrication d'un système de conditionnement dont la face externe est composée par le film de séparation.

16. Système de conditionnement contenant un laminat selon l'une des revendications 10 à 13.
